# EUROPÄISCHE PATENTSCHRIFT

(11) **EP 1 018 603 B1**
(45) Veröffentlichungstag und Bekanntmachung des Hinweises auf die Patenterteilung: **15.09.2004**
(21) Anmeldenummer: 99124533.3
(22) Anmeldetag: 09.12.1999
(51) Int. Cl.: F16C 3/02, F16D 3/74

(54) **Antriebswelle**
Drive shaft
Arbre de transmission

(30) Priorität: 08.01.1999 DE 19900449
(43) Veröffentlichungstag der Anmeldung: 12.07.2000
(73) Patentinhaber: DaimlerChrysler AG, 70567 Stuttgart (DE)
(72) Erfinder: Link, Manfred, 71334 Waiblingen (DE)

(56) Entgegenhaltungen:
- DE-U- 8 221 412
- GB-A- 1 443 599
- US-A- 2 271 567
- US-A- 2 994 213
- US-A- 5 476 421
- US-A- 5 624 990
- PATENT ABSTRACTS OF JAPAN vol. 1999, no. 03, 31. März 1999 (1999-03-31) & JP 10 331863 A (MITSUBOSHI BELTING LTD), 15. Dezember 1998 (1998-12-15)

## Beschreibung

Die Erfindung betrifft eine Welle, insbesondere Antriebswelle, nach dem Oberbegriff des Patentanspruchs 1.

Bei insbesondere einem Einsatz für zu übertragende geringe Drehmomente soll eine solche Welle einen Ausgleich hinsichtlich eines Achs- und Winkelversatzes zwischen Anschlußteilen ermöglichen.

Aus US 2,271,567 ist ein Kupplungsstück aus elastischem Material mit eingeformten Anschlußstücken aus nicht elastischem, verschleißfestem Material bekannt. Die Anschlüsse sind Ringe mit auf ihrem jeweiligen Außenumfang zur Verdrehsicherung vorgesehenen Hinterschnitten. Diese Ringe sind axial und radial formschlüssig in dem elastischen Grundkörpermaterial der Welle eingebettet. Durch einen lediglich am Außenumfang der Ringe vorhandenen Formschluß innerhalb des elastischen Grundkörpermaterials der Welle besteht die Gefahr einer nicht ausreichenden Sicherung gegen ein Verdrehen der Ringe innerhalb des Grundkörpermaterials bei von der Welle zu übertragenden Drehmomenten.

Bei einer aus US 2,994,213 bekannten Verbindungswelle mit einem elastischen Grundkörper und eingeformten unelastischen Anschlußstücken besitzen die Anschlußstücke zur Formschlußverbesserung eine besondere Form. Diese Form besteht darin, daß am Außenumfang ein nach axial innen offener Ringspalt vorgesehen ist, der von dem elastischen Grundkörpermaterial ausgefüllt wird.

Aus DE 82 21 412 U1 ist eine Torsionswelle mit einem gattungsgemäßen Aufbau bekannt. Die Anschlußstücke sind dort formschlüssig mit dem Grundkörper der Welle verbunden. Zur Erhöhung der Verbundfestigkeit können die Anschlußstücke mit dem Grundkörper verklebt sein.

Die Erfindung beschäftigt sich mit dem Problem, eine gattungsgemäße Welle kompakt bauend und sicher funktionierend und rationell herstellbar zu schaffen. Sicher funktionierend bedeutet insbesondere, daß auch bei einem radial geringen Einschluß der Anschlußstücke in elastischem Grundkörpermaterial der Welle noch eine absolute Verdrehsicherung der Anschlußstücke innerhalb des Wellengrundkörpers gewährleistet ist. Auch eine axiale Verschiebbarkeit der Anschlußstücke innerhalb des Wellen-Grundkörpermaterials soll bei einem möglichst geringen Materialaufwand für den Grundkörper absolut sicher ausgeschlossen sein. Der sichere Verbund der miteinander zu verbindenden Teile soll zumindest keinen zusätzlichen Herstellungsaufwand erfordern, sondern denjenigen der bei bisher gattungsgemäßen Teilen erbracht werden mußte, möglichst zu verringern.

Eine Lösung des erfindungsgemäßen Problems zeigt eine gattungsgemäße Antriebswelle mit den kennzeichnenden Merkmalen des Patentanspruchs 1 auf.

Die Erfindung beruht auf dem allgemeinen Gedanken, die Verdreh- und Verschiebesicherheit der Anschlußstücke innerhalb des Wellen-Grundkörpermaterials nicht ausschließlich über einen Formschluß, sondern darüber hinaus auch noch durch eine chemische Verbindung der miteinander verbundenen Materialien zu schaffen. Kunststoffe, die solche chemischen Verbindungen bei der Herstellung zusammengesetzter Teile erlauben, sind an sich bekannt.

Geeignet sind insbesondere spezielle Thermoplaste.

Zweckmäßige Formen der Anschlußstücke mit Bezug auf einen in Umfangs- und Axialrichtung zu erzielenden sicheren Formschluß sind Gegenstand entsprechender Unteransprüche.

Ein nachstehend noch näher beschriebenes Ausführungsbeispiel ist in der Zeichnung dargestellt.

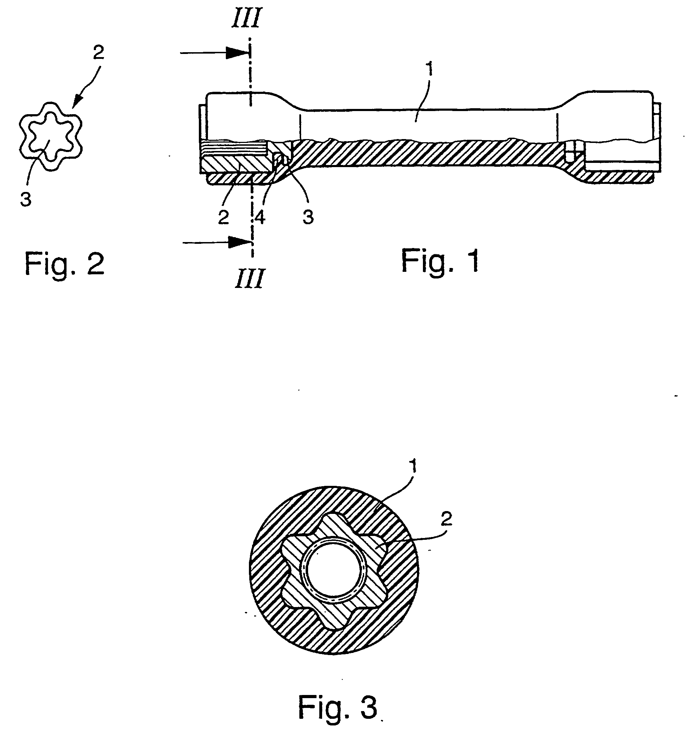

Es zeigen
- Fig. 1: Eine Antriebswelle teils in Ansicht, teils in einem Längsschnitt,
- Fig. 2: eine Ansicht auf ein Anschlußstück in noch nicht in die Welle eingeformtem Zustand in Richtung auf den geschlossenen, einen Pilzkopf aufweisenden Boden,
- Fig. 3: einen Schnitt durch die Antriebswelle im Bereich eines-Anschlußstückes längs der Linie III-III in Fig. 1.

Die dargestellte Antriebswelle besteht aus einem Grundkörper 1 aus einem weichen, elastischen Kunststoffmaterial und an den axialen Enden in diesen Grundkörper 1 eingeformten Anschlußstücken 2 aus einem harten Kunststoffmaterial.

Das weiche Kunststoffmaterial ist ein Kunststoff mit der Bezeichnung TPO (Polypropylen/EPDM-Santoprene 201/73) mit einer Härte von etwa 70 - 80 Shore. Das harte Kunststoffmaterial für die Anschlußstücke 2 kann ein Kunststoff mit der Bezeichnung PPGF 20 (Polypropylen mit 20 % Glasfaseranteil) sein. Die Anschlußstücke 2 besitzen eine napfartige Form, wobei die Näpfe im Inneren jeweils mit einer Rändelung für ein verdrehfestes Verbinden mit Anschlußteilen versehen sind.

Der Außenumfang der Anschlußstücke 2 ist polygonal ausgebildet, um hierdurch einen guten Formschluß gegen ein Verdrehen der Anschlußstücke 2 innerhalb des Grundkörpers 1 zu erreichen. Die polygonale Außenkontur ist zur Vermeidung von Kerbanrissen in dem Material des Grundkörpers 1 möglichst kantenfrei ausgeführt.

Für eine axiale Fixierung. der Anschlußstücke 2 durch Formschluß sind an den aneinander zugewandten Enden der Anschlußstücke 2 jeweils Pilzköpfe 3 angeformt. Von dem jeweiligen geschlossenen Boden des betreffenden Anschlußstückes 2 sind diese Pilzköpfe 3 durch jeweils eine Einschnürung 4 getrennt.

Radial nehmen die Pilzköpfe 3 einen geringeren Raum ein als der sich an die jeweilige Einschnürung 4 anschließende übrige Bereich eines Anschlußstückes 2. Hierdurch kann sich der Außendurchmesser des Grundkörpers 1, der im axial zentralen Teil der Welle geringer als im Bereich der Anschlußstücke 2 ist, bereits im Bereich der Pilzköpfe 3 von seinem größeren auf den kleineren Wert verringern.

Die Anschlußstücke 2 ragen axial jeweils geringfügig aus dem Grundkörper 1 heraus. Die Pilzköpfe 3 weisen auf ihrer Außenumfangskontur ähnlich wie die Hauptbereiche der Anschlußstükke 2 verdrehsichernde Hinterschnitte auf. Wie alle Hinterschnitte an den Anschlußstücken sind auch diese zur Vermeidung von Kerbrissen innerhalb des Materials des Grundkörpers 1 jeweils mit weichen Übergängen ausgestaltet.

Die Herstellung der Antriebswelle erfolgt derart, daß die bei der Herstellung miteinander in Verbindung gelangenden Materialien des Grundkörpers 1 und der Anschlußstücke 2 an den Kontaktbereichen eine chemische Verbindung miteinander eingehen. Entsprechende Herstellverfahren sind im Stand der Technik an sich bekannt. Die erfindungsgemäße Antriebswelle ist geeignet, in einem weiten Temperaturbereich bei konstruktiv geringen Abmessungen hohe Achs- und Winkelversätze zerstörungsfrei aufnehmen zu können.

## Patentansprüche

1. Welle, insbesondere Antriebswelle, zur Übertragung von Drehmomenten mit einem Grundkörper (1) aus einem elastischen ersten Kunststoffmaterial und an ihren Enden in den Grundkörper eingeformten, formschlüssig gegen Verdrehen und axiales Verschieben gesicherten Anschlußstücken (2) aus einem geringer elastischen bis unelastischen zweiten Kunststoffmaterial,
**dadurch gekennzeichnet,**
**daß** beide Materialien an den Grenzflächen der von ihnen gebildeten Teile (1, 2) miteinander vernetzt sind.

2. Welle nach Anspruch 1,
**dadurch gekennzeichnet,**
**daß** beide Kunststoffmaterialien Thermoplaste sind.

3. Welle nach Anspruch 1 oder 2,
**dadurch gekennzeichnet,**
**daß** die Anschlußstücke (2) als nach axial außen offene Näpfe mit an ihren axial einander zugewandten Enden jeweils einem angeformten Pilzkopf (3) ausgebildet sind, wobei die Pilzköpfe (3) jeweils innerhalb eines das betreffende Anschlußstück (2) umgebenden gedachten Hüllmantels liegen.

4. Welle nach einem der vorhergehenden Ansprüche,
**dadurch gekennzeichnet,**
**daß** die Anschlußstücke (2) auf ihren jeweiligen Außenumfängen umfangsmäßig hinterschnittartig ausgebildet sind.

5. Welle nach einem der vorhergehenden Ansprüche,
**dadurch gekennzeichnet,**
**daß** der Fuß jedes Pilzkopfes (3) durch eine zwischen Pilzkopf (3) und Napfbereich des betreffenden Anschlußstückes (2) liegende Einschnürung (4) gebildet ist, die innerhalb des geschlossenen Napfbodens in einen Bereich ragt, der radial innerhalb des offenen Napfbereiches liegt.

6. Welle nach einem der Ansprüche 3 bis 5,
**dadurch gekennzeichnet,**
**daß** die Hinterschnitte kantenfrei ausgebildet sind.

7. Welle nach einem der vorhergehenden Ansprüche,
**dadurch gekennzeichnet,**
**daß** die Anschlußstücke (2) axial aus dem Grundkörper (1) der Welle herausragen.

## Claims

1. Shaft, particularly a drive shaft, for transferring torques, with a basic body (1) made of a first, elastic, synthetic material and, on its ends, connection pieces (2) formed in the basic body (1), form-locking so as to prevent turning and secured against displacement, and made out of a second synthetic material,
**characterized in that**
both materials on the bordering surfaces of the parts formed by them (1, 2) are cross-linked with each other.

2. Shaft in accordance with claim 1,
**characterized in that**
both synthetic materials are thermoplastics.

3. Shaft in accordance with claims 1 or 2,
**characterized in that**
the connection pieces (2) are developed as cups that open axially outwards, with a mushroom head-type element on each of their ends facing each other axially, whereby the mushroom head-type elements (3) in each case lie within an imaginary casing surrounding the given connection piece (2).

4. Shaft in accordance with one of the preceding claims,
**characterized in that**
the connection pieces (2) have, peripherally, a waveform.

5. Shaft in accordance with one of the preceding claims,
**characterized in that**
the base of each mushroom head-type element (3) is formed by a recess (4), lying between the mushroom head-type element (3) and the cup area of the given connection piece (2), the said recess (4) projecting inside the base of the cup in an area lying radially within the open cup area.

6. Shaft in accordance with one of claims 3 to 5,
**characterized in that**
the wavy periphery is without edges.

7. Shaft in accordance with one of the preceding claims,
**characterized in that**
the connection pieces (2) project axially from the basic body (1) of the shaft.

## Revendications

1. Arbre, en particulier arbre de transmission, destiné à transmettre des couples de rotation, comprenant un corps de base (1) dans une première matière plastique élastique et, au niveau de ses extrémités, des pièces de raccordement (2), formées dans le corps de base et bloquées en rotation et en déplacement axial par emboîtement, réalisées dans une deuxième matière plastique faiblement élastique jusqu'à inélastique, **caractérisé en ce que** les deux matériaux au niveau des interfaces des pièces (1, 2) formées dans ces matériaux sont réticulés l'un dans l'autre.

2. Arbre selon la revendication 1, **caractérisé en ce que** les deux matières plastiques sont des matières thermoplastiques.

3. Arbre selon la revendication 1 ou 2, **caractérisé en ce que** les pièces de raccordement (2) sont conçues sous forme de godets ouverts axialement vers l'extérieur et sont munies chacune d'une tête de champignon (3) formée au niveau de leurs extrémités orientées l'une vers l'autre, les têtes de champignon (3) étant disposées chacune à l'intérieur d'une surface d'enveloppe imaginaire entourant la pièce de raccordement (2) concernée.

4. Arbre selon l'une quelconque des revendications précédentes, **caractérisé en ce que** les pièces de raccordement (2) sont conçues en forme de contre-dépouille périphérique sur leurs pourtours extérieurs respectifs.

5. Arbre selon l'une quelconque des revendications précédentes, **caractérisé en ce que** le pied de chaque tête de champignon (3) est formé par un rétrécissement (4) disposé entre la tête de champignon (3) et la partie de godet de la pièce de raccordement (2) concernée, lequel rétrécissement s'engage à l'intérieur du fond de godet fermé, dans une zone située radialement à l'intérieur de la partie de godet fermée.

6. Arbre selon l'une quelconque des revendications 3 à 5, **caractérisé en ce que** les contre-dépouilles sont réalisées sans arête vive.

7. Arbre selon l'une quelconque des revendications précédentes, **caractérisé en ce que** les pièces de raccordement (2) s'avancent axialement hors du corps de base (1) de l'arbre.
